## Europäisches Patentamt

## European Patent Office

## Office européen des brevets

(11) Veröffentlichungsnummer: **0 083 056**
**A2**

# (12) EUROPÄISCHE PATENTANMELDUNG

(21) Anmeldenummer: **82111845.2**

(22) Anmeldetag: **20.12.82**

(51) Int. Cl.³: **C 08 B 11/193**
**E 21 B 43/22**

(30) Priorität: **28.12.81 DE 3151681**

(43) Veröffentlichungstag der Anmeldung:
**06.07.83 Patentblatt 83/27**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Rähse, Wilfried, Dr.**
**Kohlhagenstrasse 44**
**D-4000 Düsseldorf 13(DE)**

(72) Erfinder: **Kühne, Norbert**
**Dürerstrasse 63**
**D-5657 Haan 1(DE)**

(72) Erfinder: **Wüst, Willi, Dr.**
**Fasanenring 32**
**D-4030 Ratingen-Hösel(DE)**

(54) **Hydroxyalkylcellulosen mit verbesserter Stabilität gegen Abbau, Verfahren zu ihrer Herstellung und ihre Verwendung.**

(57) Beschrieben wird ein Verfahren zur Herstellung von Hydroxyalkylcellulosen mit verbesserter Abbaustabilität in wäßrigen Lösungen. In an sich bekannter Weise wird dabei ein Cellulose-Ausgangsmaterial der Hydroxyalkylierung unterworfen, insbesondere durch Umsetzung der Cellulose mit Alkylenoxiden, beispielsweise Ethylenoxid, zweckmäßigerweise in Gegenwart von basischen Verbindungen wie Alkalihydroxid. Erfindungsgemäß werden dem Reaktionsgemisch 0,005 bis 0,8 Mol Methylchlorid und/oder Monochloressigsäure zugesetzt. Die bevorzugten, nach diesem Verfahren gewonnenen Hydroxyalkylcelluloseether besitzen die folgenden Substitutionsgrade (MS): Hydroxyalkyl-MS im Bereich von 1,5 bis 4,0, Carboxymethyl-MS und/oder Methoxyl-MS im Bereich von 0,003 bis 0,7, vorzugsweise von 0,02 bis 0,2. Die so stabilisierten Hydroxyalkylcellulosen können in technischen Anwendungen mit Vorteil eingesetzt werden und dienen beispielsweise als Hilfsstoffe bei der Erdölgewinnung.

0083056

Henkelstraße 67
4000 Düsseldorf, den 4. August 1982

HENKEL KGaA
ZR-FE/Patente
HF/Ge

Patentanmeldung
D 6515 EP

"Hydroxyalkylcellulosen mit verbesserter Stabilität
gegen Abbau, Verfahren zu ihrer Herstellung und
ihre Verwendung"

Die Erfindung betrifft neue Hydroxyalkylcellulosen, insbesondere Hydroxyethylcellulosen, die sich in Lösung durch eine verbesserte Abbaustabilität auszeichnen, so daß die Viskosität solcher Lösungen für vergleichsweise lange Zeiträume konstant bleibt. Die Erfindung betrifft in weiteren Ausführungsformen das Verfahren zur Herstellung dieser abbaustabilen Hydroxyalkylcellulosen sowie ihre Anwendung.

Hydroxyalkylcellulosen sind großtechnische Produkte. Zu ihrer Beschaffenheit, ihrer Herstellung und ihrer Verwendung besteht ein umfangreicher druckschriftlicher Stand der Technik. Die Hydroxyalkylcellulosen lassen sich normalerweise problemlos in Wasser lösen. In dieser gelösten Form werden die Produkte in der Technik, beispielsweise als Bohrspülhilfsmittel beim Fördern von Erdöl eingesetzt. Ein großer Nachteil dieser Lösungen besteht allerdings darin, daß ihre Viskosität ständig - und zwar innerhalb kurzer Zeiträume - abnimmt. Die genaue Ursache dieses Viskositätsabbaus ist bisher nicht genau geklärt, man vermutet

...

einen enzymatischen bzw. bakteriellen oder auch
einen durch Pilze hervorgerufenen Abbau.

Aufgabe der vorliegenden Erfindung war es, Mittel
zu finden, durch die eine substantielle Verlangsamung
des Abbaus der Hydroxyalkylcellulosen in Lösung,
insbesondere in wäßrigen Lösungen erreicht werden kann.

In überraschender Weise zeigt es sich,
daß nach Zugabe von geringen Mengen von Methylchlorid
und/oder Monochloressigsäure zum Reaktionsgemisch
bei der Herstellung der Hydroxyalkylcellulosen ein
Produkt erhalten wird, das weitgehend abbaustabil ist.
Wegen der geringen Mengen kann von einer Mischveretherung im eigentlichen Sinne nicht gesprochen werden.
Die erhaltenen Produkte sind weiterhin Hydroxyalkylcellulosen, allerdings mit einer untergeordneten
Menge an Methoxyl- bzw. Carboxymethyl-Gruppen.
So liegt beispielsweise etwa eine Methoxyl- bzw.
Carboxymethyl-Gruppe auf circa 3 bis 1 000  Anhydroglukose-Einheiten in den erfindungsgemäß
stabilisierten Produkten vor.

Gegenstand der Erfindung ist dementsprechend in einer
ersten Ausführungsform das Verfahren zur Herstellung
von Hydroxyalkylcellulosen, insbesondere von Hydroxyethylcellulosen, bei dem in an sich bekannter Weise
ein Cellulose-Ausgangsmaterial zum Hydroxyalkylether
umgewandelt wird. Üblicherweise wird die Cellulose
mit Alkylenoxiden, bevorzugt Ethylenoxid, umgesetzt,
wobei zweckmäßigerweise in Gegenwart basischer
Verbindungen gearbeitet wird. Die bevorzugten

. . .

basischen Verbindungen sind Alkalihydroxide, insbesondere Natriumhydroxid. Erfindungsgemäß ist das Verfahren
dadurch gekennzeichnet, daß zur Herstellung von Produkten mit verbesserter Abbaustabilität dem Reaktionsgemisch kleine Mengen an Methylchlorid und/oder Monochloressigsäure zugegeben werden, die bevorzugt im
Bereich von 0,005 bis 0,8 Mol dieser zusätzlichen
Veretherungsmittel pro Mol Anhydroglukose-Einheit
liegen. Bei den üblichen Selektivitäten von 30 bis 70 %
sind dann die entsprechenden Bruchteile dieser zusätzlichen Veretherungsmittel an die Cellulose gebunden,
beispielsweise also bei einer Selektivität von 50 %
die Hälfte der eingesetzten hydroxylgruppenfreien
Veretherungsmittel. Bevorzugt werden die hydroxylgruppenfreien Veretherungsmittel in Mengen von etwa
0,02 bis 0,2 Mol pro Mol Anhydroglukose-Einheit eingesetzt.


Wie durch Versuche gezeigt werden kann, nimmt die
Viskosität der wäßrigen Lösung reiner Hydroxyethylcellulosen innerhalb von 8 Tagen, beispielsweise von
5 000 mPa·s auf 1 300 mPa·s bzw. von 19 500 mPa·s
auf 11 000 mPa·s ab. Innerhalb von 4 Wochen fiel bei
diesen Versuchen die Viskosität einer konventionellen
Hydroxyethylcellulose-Lösung, aufbewahrt im geschlossenen Gefäß, von 26 500 mPa·s auf etwa
100 mPa·s ab, nach 8 Wochen betrug die Viskosität
dieser Lösung nur noch etwa 15 mPa·s.


Demgegenüber ist bei den erfindungsgemäß hergestellten
Produkten eine bedeutend erhöhte Viskositätsstabilisierung in wäßriger Lösung zu beobachten. So findet
beispielsweise bei den erfindungsgemäß hergestellten

. . .

Produkten innerhalb von 8 Tagen keine Abnahme der Viskosität wäßriger Lösungen statt. Nach 4 Wochen liegt die Viskositätsabnahme im Bereich zwischen 0 und 20 %. Das bedeutet, daß sich in vielen Fällen ein Viskositätsabbau innerhalb dieses Bereiches meßtechnisch nicht erfassen läßt.

Diese Unterschiede in den Meßwerten zwischen konventionellen Hydroxyethylcellulose-Lösungen sowie den mit den erfindungsgemäß hergestellten Produkten erhaltenen Lösungen sind bemerkenswert.
Eine wissenschaftliche Erklärung für diese stabilisierende Wirkung der geringen Mengen an Methoxy- bzw. Carboxymethyl-Gruppen im Hydroxyalkylcelluloseether kann nicht gegeben werden. Auffallend und vorteilhaft ist weiterhin, daß die Lösungen der erfindungsgemäß hergestellten Hydroxyalkylcellulosen eine verbesserte Oberflächenstruktur aufweisen. Diese Oberflächenstruktur besitzt nicht mehr den bisher bekannten gelartigen Charakter, die Lösungen fließen vielmehr "glatt" ab.
Der unerwartete stabilisierende Einfluß der erfindungsgemäßen geringen Zusätze bei der Umwandlung von Cellulose zu Hydroxyalkylcellulosen tritt unabhängig von der gewählten Herstellungsart der Hydroxyalkylcellulosen auf. Es spielt also beispielsweise keine Rolle, ob die Umsetzung kontinuierlich oder diskontinuierlich abläuft und ob die Cellulose einer starken Scherung oder sonstigen Aktivierung unterworfen wird. Ebenfalls ohne Einfluß ist die Art der Cellulose und Partikelgröße der eingesetzten Cellulose. Alle bekannten Cellulosesorten und Feinheiten lassen sich nach dem erfindungsgemäßen Verfahren umsetzen. Zu den an sich bekannten Einzelheiten der Gewinnung von Hydroxyalkylcellulosen wird auf den druckschriftlichen Stand der Technik

...

verwiesen, genannt seien hier beispielsweise die
DE-AS 15 18 979 sowie die DE-OS 29 24 330.

Gegenstand der Erfindung sind in einer weiteren
Ausführungsform die nach dem erfindungsgemäßen
Verfahren gewonnenen - gemischten - Hydroxyalkylcelluloseether. In einer bevorzugten Ausführungsform
der Erfindung weisen diese Mischether einen
Hydroxyalkyl-Substitutionsgrad (Hydroxyalkyl-MS)
im Bereich von etwa 1,5 bis 4,0 auf.
Der Carboxymethyl-MS und/oder der Methoxyl-MS
liegt dabei bevorzugt im Bereich von etwa 0,003 bis
0,7, insbesondere innerhalb des Bereiches von etwa
0,02 bis 0,2.

Schließlich betrifft ein weiterer Aspekt der Erfindung
die Verwendung dieser erfindungsgemäß stabilisierten
Hydroxyalkylcelluloseether als Hilfsstoffe in
technischen Anwendungsgebieten, insbesondere als
Hilfsstoffe bei der Erdölbohrung bzw. Erdölgewinnung
im übrigen bekannter Weise.

. . .

## Beispiel

Die Viskosität der Hydroxyalkylcellulose-Lösungen wurde in 2%iger wäßriger Lösung unter Annahme von 5 % Feuchtigkeit des Celluloseethers bei 20,0 °C nach Brookfield ermittelt. Die Trübungszahl wird in einem Meßgerät der Firma Lange, Berlin, in Küvetten mit 3,5 cm Schichtdicke gemessen.

70 kg Fichtencellulose mit einer maximalen Faserlänge von circa 1 mm und einem Feuchtegehalt von circa 4 % wurden in 1 020 kg 87%igem Isopropanol suspendiert. Die Suspension ist durch Anlegen eines Vakuums von circa 150 Torr entgast worden. Danach wurden 36,5 kg 50 %ige Natronlauge bei circa 18 °C innerhalb von 5 Minuten zugegeben. Bei etwa 40 bis 45 °C erfolgte die Zugabe von 80,3 kg Ethylenoxid und von 2,09 kg Methylchlorid. Die Umsetzung wurde 1 Stunde bei 50 °C und eine Stunde durch Aufheizen und Halten bei 80 °C vervollständigt.

Das mit einer Alkohol/Wasser-Mischung gereinigte Produkt weist eine Viskosität von 21 500 mPa·s und eine Trübungszahl von 9 % auf. Der Hydroxyethyl-MS des Produktes beträgt 2,2, der Methoxyl-MS circa 0,05.

Nach 4wöchiger Lagerung der Lösung im geschlossenen Gefäß bei Raumtemperatur wird erneut die Viskosität bestimmt. Sie beträgt 21 800 mPa·s, das heißt einen innerhalb der Fehlergrenze der Messung identischen Wert.

## Patentansprüche

1) Verfahren zur Herstellung von Hydroxyalkylcellulosen, insbesondere von Hydroxyethylcellulosen, durch Umsetzung eines Cellulose-Ausgangsmaterials mit Alkylenoxiden, insbesondere Ethylenoxid, in Gegenwart von basischen Verbindungen, insbesondere Alkalihydroxid, dadurch gekennzeichnet, daß zur Herstellung von Produkten mit verbesserter Abbaustabilität dem Reaktionsgemisch 0,005 bis 0,8 Mol Methylchlorid und/oder Monochloressigsäure pro Mol Anhydroglukose-Einheit zugesetzt werden.

2) Verfahren nach Anspruch 1, dadurch gekennzeichnet, daß dem Reaktionsgemisch etwa 0,02 bis 0,2 Mol Methylchlorid und/oder Monochloressigsäure pro Mol Anhydroglukose-Einheit zugesetzt werden.

3) Verfahren nach Ansprüchen 1 und 2, dadurch gekennzeichnet, daß man im Verfahrensprodukt die folgenden Substitutionsgrade einstellt: Hydroxyalkyl-MS im Bereich von 1,5 bis 4,0, Carboxymethyl-MS und/oder Methoxyl-MS im Bereich von 0,003 bis 0,7, vorzugsweise im Bereich von 0,02 bis 0,2.

4) Gemischter Hydroxyalkylcelluloseether, gekennzeichnet durch einen Hydroxyalkyl-MS im Bereich von 1,5 bis 4,0 und einen Carboxymethyl-MS und/oder einen Methoxyl-MS im Bereich von 0,003 bis 0,7, vorzugsweise im Bereich von 0,02 bis 0,2.

5) Verwendung der gemischten Hydroxyalkylcelluloseether nach Anspruch 4 als Hilfsstoffe bei der Erdölgewinnung.